# EUROPEAN PATENT APPLICATION

(11) **EP 4 787 697 A1**
(43) Date of publication of application: **05.08.2026**
(21) Application number: 25154914.3
(22) Date of filing: 30.01.2025
(51) Int. Cl.: H02M 1/32, H02M 3/335

(54) **SURGE PROTECTION CIRCUIT AND METHOD FOR A FLYBACK CONVERTER**

(71) Applicant: Tridonic GmbH & Co. KG, 6851 Dornbirn (AT)
(72) Inventor: Schneider, Miguel Philipp, 6851 Dornbirn (AT); Dimic, Nikola, 6851 Dornbirn (AT); Maldoner, Jakob, 6851 Dornbirn (AT)
(74) Representative: Rupp, Christian

(57) **Abstract**

The present invention provides a surge protection circuit for a Flyback converter, the Flyback converter having a control integrated circuit, IC, with a current-sense pin, and a switching transistor. The surge protection circuit comprises: a surge event detection component configured to detect a surge event based on a mains input voltage to the Flyback converter, and generate an output signal upon detecting the surge event; and a signal path from the surge event detection component to the current-sense pin of the control IC, wherein the output signal is adapted to emulate an overcurrent condition at the current-sense pin, thereby triggering the control IC to halt switching of the switching transistor during the surge event.

## Description

### TECHNICAL FIELD

The present invention relates to power converters, and more particularly to a surge protection circuit for a Flyback converter that detects and responds to high input voltage conditions in order to protect the primary switching device (e.g., a MOSFET) and control circuitry from damage.

### BACKGROUND

Flyback converters are widely used in switched-mode power supplies and LED drivers, due to their simplicity and cost-effectiveness. In such applications, over-voltage surges on the input line can result in destructive voltage spikes at the primary switch (e.g., a power MOSFET). These spikes, compounded by leakage inductances and parasitic components, can exceed the safe operating voltage of the switch, potentially leading to device failure.

Conventional approaches often rely on snubber or clamping networks to dissipate or clamp the voltage spike. However, for higher power Flyback designs (e.g., 60 W), such clamping networks can introduce high losses and thermal hotspots, degrading overall efficiency and reliability.

### SUMMARY

In view of the above-discussed issues, this invention is aim to introduce a surge protection circuit to protect the power switch and associated circuitry from overvoltage stress. One objective is to sense an input over-voltage condition and trigger a fast shutdown of the power switch. Additionally, the invention aims to reduce the energy dissipated in snubber components.

These and other objectives are achieved by the solution of this disclosure as described in the independent claims. Advantageous implementations are further defined in the dependent claims.

According to a first aspect of the invention, a surge protection circuit for a Flyback converter, is provided. The Flyback converter has a control integrated circuit (IC) with a current-sense pin, and a switching transistor. The surge protection circuit comprises a surge event detection component configured to detect a surge event based on a mains input voltage to the Flyback converter, and generate an output signal upon detecting the surge event. The surge protection circuit also comprises a signal path from the surge event detection component to the current-sense pin of the control IC, wherein the output signal is adapted to emulate an overcurrent condition at the current-sense pin, thereby triggering the control IC to halt switching of the switching transistor during the surge event.

The present invention leverages the inherent overcurrent protection (OCP) function already present in many off-the-shelf Flyback controller ICs. This avoids the need for external high-voltage detection circuitry to drive a separate shutdown input or for custom modifications to the IC itself.

By driving the current sense pin to emulate an overcurrent situation, the control IC shuts down power stage switching almost instantaneously, providing a rapid response to sudden surges. This prompt action prevents the generation of potentially destructive voltage spikes at the MOSFET drain.

In an implementation of the first aspect, the surge event detection component comprises a voltage sensing arrangement configured to monitor a rectified input voltage of the Flyback converter; and a comparator coupled to the voltage sensing arrangement, configured to compare the monitored input voltage against a predetermined threshold, and generate the output signal when the detected input voltage exceeds the predetermined threshold.

For instance, the rectified input voltage may be sensed via a voltage divider. The comparator-based detection provides a straightforward, real-time assessment of the input voltage level, ensuring reliable identification of surge conditions. Optionally, the threshold may be adjustable. Designers can configure the threshold to suit various voltage limits or application requirements, offering flexibility across different power systems.

In an implementation of the first aspect, the surge protection circuit further comprises a transistor configured to discharge a gate of the switching transistor to ground upon detection of the surge event.

The transistor is controlled by the output signal from the comparator. In applications requiring an even faster turn-off, a simple external transistor can be used to discharge the gate of the Flyback FET to ground, ensuring the MOSFET is switched off in the shortest possible time.

In an implementation of the first aspect, the surge protection circuit further comprises a damping resistor configured to reduce the amplitude of oscillations on a drain of the switching transistor upon detection of the surge event.

By introducing a resistor specifically designed to dissipate leakage inductance energy, the surge protection circuit can substantially reduce high-frequency ringing on the drain. Lower oscillatory peaks reduce the risk of exceeding the MOSFET's voltage rating, thus improving reliability and lifetime.

In an implementation of the first aspect, the surge protection circuit further comprises an auxiliary winding on a primary side of a transformer of the Flyback converter, wherein the transistor is further configured to connect the auxiliary winding to ground through the damping resistor upon detection of the surge event.

The auxiliary winding offers a convenient path to dissipate the inductance energy, preventing large oscillations that could exceed the MOSFET's maximum drain-source rating. By engaging a damping resistor only when needed (i.e., during a surge), the system avoids continuous power loss that might occur in a permanently connected snubber.

According to a second aspect of the invention, a power converter is provided. The power converter comprises a Flyback converter having a control IC with a current-sense pin, and a switching transistor. The power converter also comprises a surge protection circuit according to the first aspect of the invention or any implementation forms of the first aspect.

This invention proposes to incorporate the surge protection within the larger power converter, which results in a unified approach to both normal operation and transient response. Designers can adopt the surge protection circuit with minimal changes to an existing Flyback design, expediting time-to-market. Preventing damage from voltage surges avoids expensive repairs or replacements, thus improving the overall value of the power solution.

In an implementation of the second aspect, the control IC is configured to: stop switching during an overcurrent condition; and restart switching operation automatically after a predefined off-time once the overcurrent condition has subsided.

Automatic restart reduces the need for manual intervention or complex reset logic after a surge event, enhancing user-friendliness. The off-time provides an interval for the input voltage to stabilize, mitigating repeated rapid on/off toggling under persistent transient conditions.

In an implementation of the second aspect, the power converter is for driving an LED load.

LED applications demand continuous operation and quick recovery from faults. Surge protection enhances reliability in environments prone to voltage spikes.

According to a third aspect of the invention, a system is provided. The system comprises a power converter as described in the second aspect or any of the implementations of the second aspect, and an LED-based load supplied directly, or by means of a further converter stage, by the said power converter.

The solution can be implemented in various LED systems, from small-scale residential lighting to larger industrial installations. Mitigating surge-related failures lowers the frequency of service calls or replacements, which is critical in applications where consistent lighting is essential.

According to a fourth aspect of the invention, a surge protection method for a Flyback converter having a control IC with a current-sense pin, and a switching transistor, is provided. The method comprises the steps of: detecting a surge event based on an input voltage to the Flyback converter; generating a signal emulating an overcurrent condition upon detecting the surge event; and providing said signal to the current-sense pin of the control IC, thereby triggering the control IC to halt switching of the switching transistor during the surge event.

By generating an immediate overcurrent signal, the method ensures that the switching transistor is turned off quickly, reducing potentially damaging voltage stress. This approach can be realized using different hardware (comparators, microcontrollers) or firmware methods, making it adaptable across multiple product lines or applications.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Figure 1: shows an exemplary surge protection circuit according to an embodiment of this invention.
- Figure 2: shows a block diagram illustrating the power conversion and protection process according to an embodiment of this invention.
- Figure 3: shows exemplary waveforms in (a) a conventional Flyback converter circuit, and (b) the proposed Flyback converter circuit.
- Figure 4: shows behavior of various circuit nodes and currents during operation of the Flyback converter, according to an embodiment of this invention.
- Figure 5: shows a method according to an embodiment of this invention.

### DETAILED DESCRIPTION OF EMBODIMENTS

Illustrative embodiments of a surge protection circuit, a power converter, a system, and a surge protection method are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

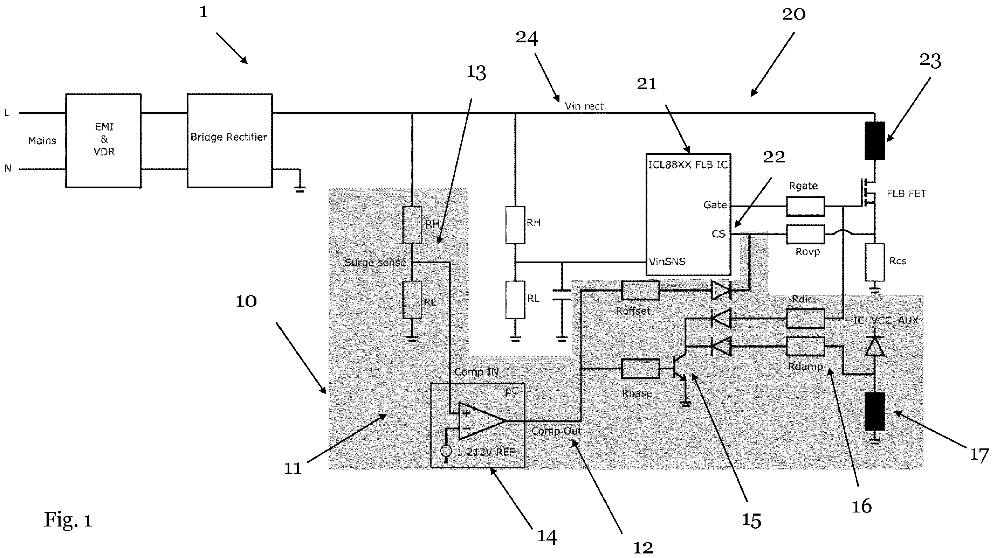

Figure 1 shows an embodiment of a surge protection circuit 10 for a Flyback converter 20. The Flyback converter 20 has a control IC 21 with a current-sense (CS) pin 22, and a switching transistor 23. The surge protection circuit 10 comprises a surge event detection component 11 configured to detect a surge event based on a mains input voltage to the Flyback converter 20, and generate an output signal 12 upon detecting the surge event.

The surge protection circuit 10 further comprises a signal path from the surge event detection component 11 to the current-sense pin 22 of the control IC 21, wherein the output signal 12 is adapted to emulate an overcurrent condition at the current-sense pin 22, thereby triggering the control IC 21 to halt switching of the switching transistor 23 during the surge event.

It can be seen that Figure 1 provides a simplified schematic diagram of an exemplary Flyback converter 20 (only a part of the Flyback converter are shown in this figure) equipped with the disclosed surge protection features. It illustrates both the primary side of the converter-including the rectified input voltage ("Vin rect."), the control IC (labeled "FLB IC"), and the main power MOSFET ("FLB FET")-as well as the additional circuits used to detect and mitigate high-voltage surge events.

In one implementation, the surge event detection component 11 comprises a voltage sensing arrangement 13 configured to monitor the Vin rectified voltage 24 of the Flyback converter 20; and a comparator 14 coupled to the voltage sensing arrangement 13, configured to compare the monitored input voltage against a predetermined threshold, and generate the output signal 12 when the detected input voltage exceeds the predetermined threshold.

Optionally, the voltage sensing arrangement 13 may be a resistor divider formed by RH and RL samples the rectified input voltage 24. This divided voltage feeds into a microcontroller (µC)/comparator stage 14. This stage monitors the input voltage level and determines when a surge threshold is exceeded.

Referring to Figure 1, it can be seen that the Flyback control IC 21 has a Gate output that drives the switching transistor 23 (FLB FET) through a gate resistor (Rgate) and an optional overvoltage resistor (Rovp).

The current-sense pin 22 monitors the primary-side current via a sense resistor (Rcs). During a surge, the output signal 12 ("Comp Out") forces a high-level signal onto the CS pin to emulate an overcurrent condition, causing the IC to halt switching.

The Vin pin of the IC 21 may be supplied from the rectified input or an auxiliary supply, as appropriate for the particular controller design.

Optionally, the surge protection circuit 10 may further comprise a transistor 15 configured to discharge a gate of the switching transistor 23 to ground upon detection of the surge event.

In other word, if the comparator 14 detects a surge condition or surge event, the gate discharge transistor 15 can rapidly discharge the MOSFET gate to ground (through "Rdis." in the figure), ensuring a fast switch-off.

Roffset and Rbase are shown as part of the biasing or level-shifting network used to drive the transistors responsible for gate discharge or damping.

Optionally, the surge protection circuit 10 may further comprise an oscillation damping path. It may comprise a damping resistor 16 configured to reduce the amplitude of oscillations on a drain of the switching transistor 23 upon detection of the surge event.

Optionally, the surge protection circuit 10 may further comprise an auxiliary winding 17 on the primary side of a transformer of the Flyback converter 20(not fully depicted in the figure, but indicated via "IC_VCC_AUX" in the lower-right portion). The auxiliary winding 17 is coupled to the damping resistor 16 ("Rdamp"). When a surge event occurs and switching is halted, the damping resistor 16 dissipates residual energy from the inductance and/or snubber capacitor, preventing high-voltage oscillations that could damage the MOSFET.

Diodes are shown directing current from the auxiliary winding through Rdamp to ground, acting only during surge or shutdown conditions to quickly damp the drain node's ringing.

Referring to Figure 1, the microcontroller ("pC") or comparator 14, which receives the scaled input voltage and an exemplary 1.212 V reference voltage. Once the input voltage crosses the predefined threshold, the comparator 14 output ("Comp Out") toggles high, propagating through the signal path to the current-sense pin 22, and optional, the transistor 15, and the damping resistor 16.

Overall, Figure 1 demonstrates how the surge detection signal (derived from the input voltage sensing) and the Flyback controller IC's internal overcurrent protection functionality cooperate to provide a rapid and robust response to surge conditions. Further specific design elements-such as the gate-discharge path and the damping resistor on the auxiliary winding-further ensure that any high-voltage oscillations are contained, preserving the MOSFET's integrity and maintaining reliable converter operation.

It may be understood that Figure 1 further demonstrates a power converter 1 comprising such Flyback converter 20 and the proposed surge protection circuit 10 as above discussed. For instance, the power converter 1 may be designed for driving an LED load.

The power converter 1 may be supplied with an AC mains power inputs. An electromagnetic interference (EMI) filter may be integrated, which includes passive components such as inductors and capacitors that attenuate high-frequency noise.

Said power converter 1 may also comprise a rectification stage (Bridge Rectifier Module), for converting the AC voltage into a pulsating DC voltage. This rectified voltage is then provided to the further stage, e.g., the Flyback converter 20.

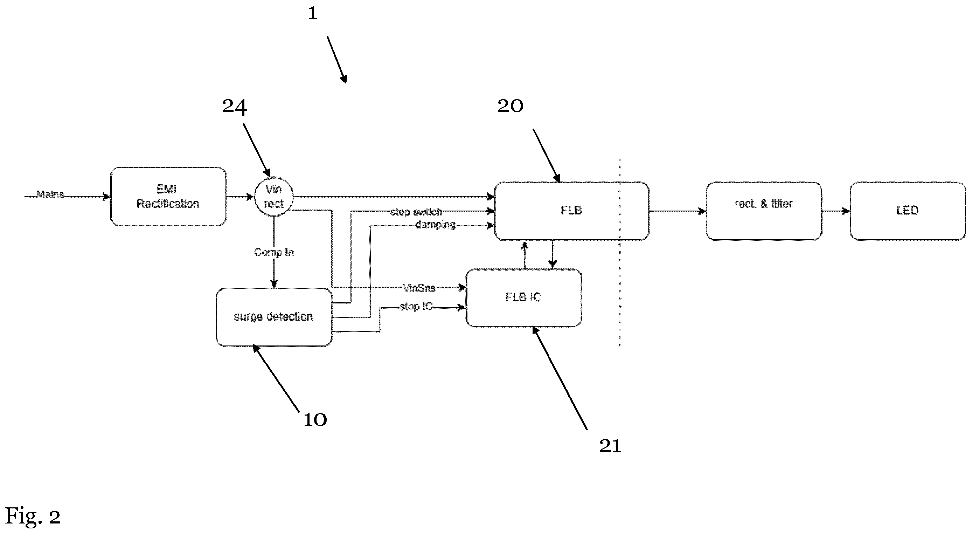

Figure 2 shows a block diagram illustrating the power conversion and protection process for an LED driver circuit, according to an embodiment of this invention.

The system starts with an AC mains input, which provides electrical power. The input passes through an EMI rectification stage, which filters and rectifies the AC voltage to produce a rectified voltage 24.

The surge protection circuit 10 monitors the rectified voltage and detects voltage surges. It receives a "Comp In" signal and provides control outputs such as "VinSns" and "stop IC" to regulate power flow in case of abnormalities.

The Flyback converter (FLB) 20 receives the rectified voltage 24. It also receives signals from the surge detection circuit 10 to stop switching or damping in case of overvoltage conditions.

The control IC 21 controls the operation of the Flyback Converter 20. It receives voltage sensing (VinSns) and stop control signals from the surge detection circuit 10.

Possibly, the control IC 21 of the Flyback converter 20 is configured to stop switching during an overcurrent condition; and restart switching operation automatically after a predefined off-time once the overcurrent condition has subsided.

The output from the FLB stage may be further rectified and filtered to provide a stable DC output. The final output may power an LED.

Notably, this invention also proposes a system comprising a power converter 1, and an LED-based load supplied directly, or by means of a further converter stage, by the said power converter 1.

To better understand the invention, it may be helpful to first examine the limitations of conventional Flyback converter designs. In traditional configurations, as the output voltage decreases, the low-side on-time (LS on-time) must be extended to maintain the required energy transfer for achieving the desired lower output voltage. However, increasing the LS on-time introduces several issues that impact efficiency, stability, and component stress, as detailed below.

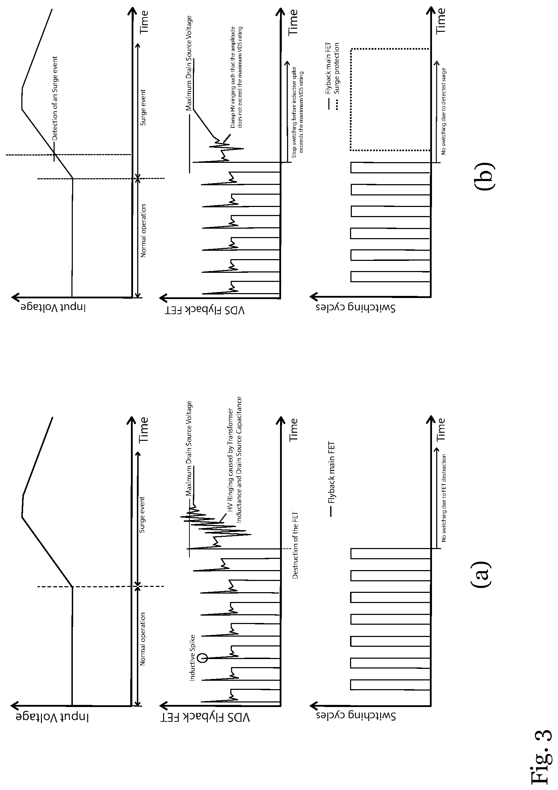

Figure 3(a) illustrates the challenges faced by the conventional Flyback converter when a surge condition occurs.

The top plot (Rectified Input Voltage) of Figure 3(a) depicts that during normal operation, the input line voltage remains at a steady level. At the dashed vertical line, a surge event begins, causing the input voltage to rise sharply and then remain at an elevated level before eventually declining.

The middle plot (Flyback FET VDS) of Figure 3(a) depicts that as the surge commences, the transistor drain-source voltage exhibits large inductive spikes. These spikes result from stored energy in the transformer's inductance and the transistor's parasitic capacitances, causing high-frequency ringing. When the surge is significant and uncontrolled, the peak VDS can exceed the transistor's maximum rating. The illustration shows that these rising spikes and ringings ultimately surpass the device's safe operating limit, leading to "destruction of the FET."

The bottom plot (Switching Cycles) of Figure 3(a) depicts that the power switch continues its normal switching activity until it is overstressed by the surge. Once the FET is damaged, switching ceases altogether ("no switching due to FET destruction").

Figure 3(b) illustrates the proposed surge protection strategy.

In particular, the top plot of Figure 3(b) shows that as a surge event is detected (indicated by the vertical dashed lines), the system identifies the rising input voltage.

The middle plot of Figure 3(b) shows that when surge protection is activated, the design either damps or mitigates the high-voltage ringing so that the peak VDS never exceeds the maximum rating. The inductive spikes are kept within safe limits (e.g., by a clamping circuit, active snubber, or controlled switching strategy).

The bottom plot of Figure 3(b) shows that the system responds to the detected surge in a protective manner.

Either the main Flyback FET is switched in a modified pattern (e.g., reduced duty cycle or frequency) or switching is halted altogether once the surge threshold is reached, preventing destructive voltage stress. The added "Surge protection" line represents a coordinated action-such as disabling the converter or shifting to a protective mode-until the overvoltage condition has subsided.

These figures illustrate how detecting and reacting to an overvoltage (surge) event can prevent catastrophic failure of the Flyback converter's main switching transistor. By controlling or suspending normal switching operation-and optionally employing damping/absorption techniques-one can ensure the transistor's VDS remains below its maximum rating, thereby improving surge robustness and overall power-supply reliability.

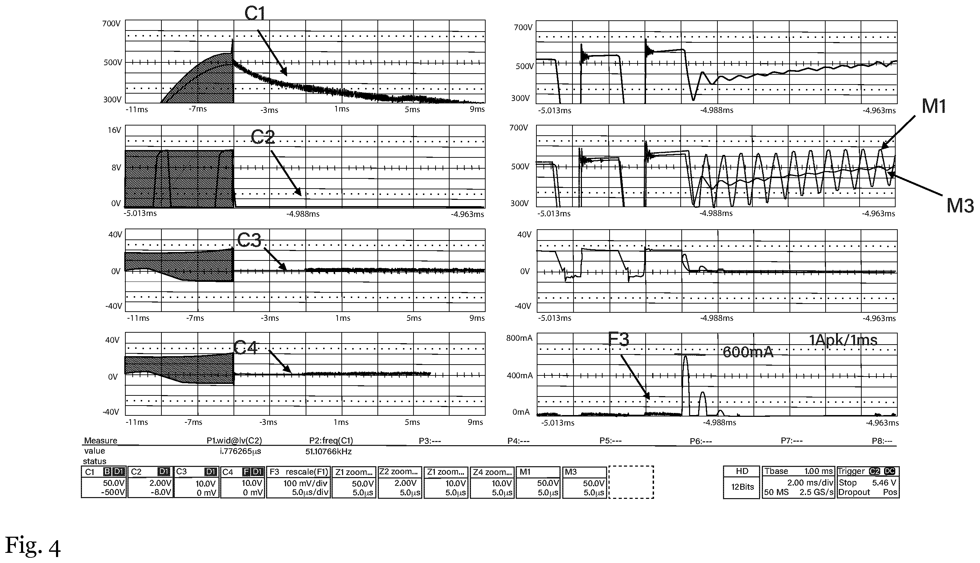

Figure 4 shows a set of oscilloscope waveforms measured from a Flyback converter circuit configured with surge-protection features. In particular, Figure 4 depicts a plurality of traces that illustrate the behavior of various circuit nodes and currents during operation of the flyback converter, both with and without an additional damping or snubber network. The following description explains each labeled signal in turn.

Trace C1 shows the voltage across the main switching transistor (typically a MOSFET) from its drain to its source terminal. During each switching cycle, the drain-to-source voltage ramps up from near zero to a high level (often several hundred volts) when the MOSFET switches off. The figure clearly indicates a peak overshoot in the absence of damping, followed by a decaying ring or oscillation. Such overshoot is undesirable as it may stress the MOSFET or associated circuitry under surge conditions.

Trace C2 (magenta) depicts the gate voltage applied to the MOSFET. This waveform indicates the time intervals during which the transistor is driven into conduction (gate voltage high) and switched off (gate voltage low). The trace in Figure 4 shows typical transitions between approximately 0V and an on-drive level of about 8 V to 16V, though exact levels may vary depending on design requirements.

Traces C3 and C4 represent voltages measured at or derived from an auxiliary winding of the converter's transformer. The auxiliary winding provides power (for example, for the controller circuitry) and feedback signals for regulation. Each trace corresponds to a distinct node connected to or referencing the auxiliary winding (for instance, one trace may be the raw voltage on the auxiliary winding, while the other is a filtered supply rail derived from that winding).

Trace F3 is the measured current through the auxiliary winding. Notably, the current peaks at approximately 600mA in the event shown. Such peak current is significant in evaluating the stresses on the winding, rectifier, and any snubber networks associated with the auxiliary circuit.

The right-side waveforms (M1 and M3) depict the same drain-to-source voltage signal as in C1 but highlight the difference between an undamped configuration (M1) and a damped configuration (M3). In the undamped scenario (M1), the peak overshoot is higher, and substantial ringing persists after the main MOSFET transition. In contrast, with the damping or snubber network enabled (M3), both the voltage spike and subsequent ringing are visibly suppressed, reducing stress on the MOSFET and associated components.

It can be seen from this figure that, during normal operation of the Flyback converter, the MOSFET is turned on by applying a gate voltage (trace C2) to energize the primary winding. When the MOSFET switches off, energy is transferred to the output and auxiliary windings. In the absence of a damping network, the abrupt change in current results in a high-voltage overshoot on the drain node (trace C1 or M1), along with resonant ringing at a frequency determined by inductances and capacitances in the circuit. By adding a damping or snubber circuit, shown in M3, the overshoot is clamped or reduced, and the resonant ringing is diminished, improving reliability and surge tolerance.

The measured signals confirm that the damping network reduces peak voltage spikes on the MOSFET's drain, as well as dampening high-frequency oscillations. Such damping is particularly beneficial in environments subject to input surges or transient events, ensuring the circuit remains within safe operating limits and mitigating EMI generated by high-dv/dt transitions.

Although specific voltage and current levels are depicted, it should be understood that the exact waveforms will vary with load conditions, transformer design, and component selections. The principles demonstrated in Figure 4, however, are representative of how an auxiliary winding and a damping network can be used in a Flyback converter to achieve improved transient performance and component protection.

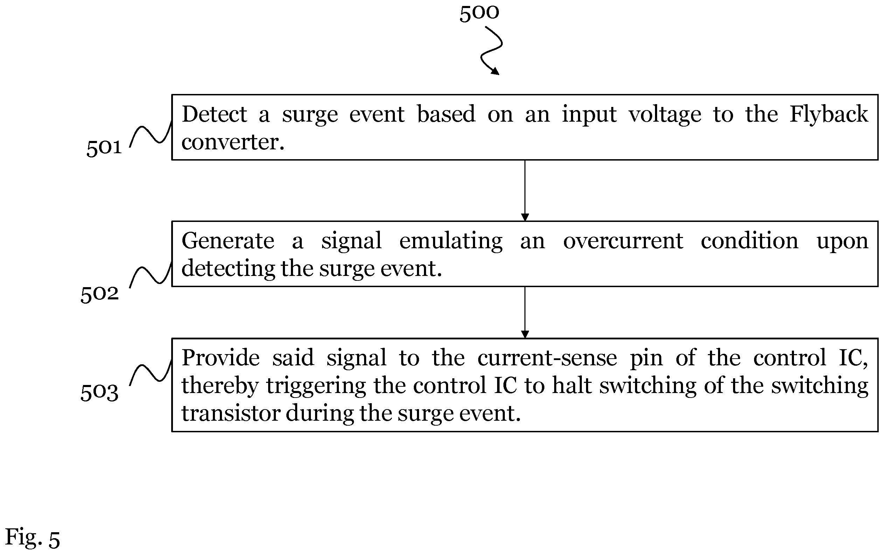

With reference to Figure 5, an embodiment of a surge protection method 500 for a Flyback converter 20, is illustrated. Said Flyback converter 20 has a control IC 21 with a current-sense pin 22, and a switching transistor 23. The method 500 enables surge protection of the converter's operation, specifically in an LED-driving application. The Flyback converter 20 may the converter shown in Figure 1. The method 500 may be performed by a surge protection circuit 10 as shown in Figure 1.

The method begins with detecting a surge event based on an input voltage to the Flyback converter, as shown in step 401.

For instance, the input voltage may be monitored and being compared against a predetermined threshold. and generate the output signal when the detected input voltage exceeds the predetermined threshold.

Next, in step 502, the method involves generating a signal emulating an overcurrent condition upon detecting the surge event.

In step 503, the method includes providing said signal to the current-sense pin of the control IC, thereby triggering the control IC to halt switching of the switching transistor during the surge event.

By driving the current sense pin to emulate an overcurrent situation, the control IC shuts down power stage switching almost instantaneously, providing a rapid response to sudden surges. This prompt action prevents the generation of potentially destructive voltage spikes at the MOSFET drain. This approach can be realized using different hardware (comparators, microcontrollers) or firmware methods, making it adaptable across multiple product lines or applications.

This proposed surge protection method can be applied to many applications including LED applications that demand continuous operation and quick recovery from faults. Surge protection enhances reliability in environments prone to voltage spikes. By limiting or preventing large surge currents, the converter helps protect LEDs from thermal or electrical overstress, thereby maintaining brightness and extending service life.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations, and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A surge protection circuit (10) for a Flyback converter (20), the Flyback converter (20) having a control integrated circuit, IC, (21) with a current-sense pin (22), and a switching transistor (23), the surge protection circuit (10) comprising:
a surge event detection component (11) configured to detect a surge event based on a mains input voltage to the Flyback converter (20), and generate an output signal (12) upon detecting the surge event; and
a signal path from the surge event detection component (11) to the current-sense pin (22) of the control IC (21), wherein the output signal (12) is adapted to emulate an overcurrent condition at the current-sense pin (22), thereby triggering the control IC (21) to halt switching of the switching transistor (23) during the surge event.

2. The surge protection circuit (10) of claim 1, wherein the surge event detection component (11) comprises:
a voltage sensing arrangement 13 configured to monitor a rectified input voltage (24) of the Flyback converter (20); and
a comparator (14) coupled to the voltage sensing arrangement (13), configured to compare the monitored input voltage against a predetermined threshold, and generate the output signal (12) when the detected input voltage exceeds the predetermined threshold.

3. The surge protection circuit (10) of any preceding claims, further comprising a transistor (15) configured to discharge a gate of the switching transistor (23) to ground upon detection of the surge event.

4. The surge protection circuit (10) of any preceding claims, further comprising a damping resistor (16) configured to reduce the amplitude of oscillations on a drain of the switching transistor (23) upon detection of the surge event.

5. The surge protection circuit (10) of claims 3 and 4, further comprising an auxiliary winding (17) on a primary side of a transformer of the Flyback converter (20), wherein the transistor (15) is further configured to connect the auxiliary winding (17) to ground through the damping resistor 16 upon detection of the surge event.

6. A power converter (1) comprising:
a Flyback converter (20) having a control integrated circuit, IC (21), with a current-sense pin (22), and a switching transistor (23), and
a surge protection circuit (10) of any preceding claims.

7. The power converter (1) of claim 6, wherein the control IC (21) is configured to:
stop switching during an overcurrent condition; and
restart switching operation automatically after a predefined off-time once the overcurrent condition has subsided.

8. The power converter (1) of claim 6 or 7, wherein the power converter (1) is for driving an LED load.

9. A system comprising:
a power converter (1) according to any of the claims 6 to 8, and
an LED-based load supplied directly or by means of a further converter stage of the system, by said power converter (10).

10. A surge protection method (500) for a Flyback converter (20) having a control integrated circuit, IC (21), with a current-sense pin (22), and a switching transistor (23), the method (500) comprising:
detecting (501) a surge event based on a mains input voltage to the Flyback converter (20);
generating (502) a signal (12) emulating an overcurrent condition upon detecting the surge event; and
providing (503) said signal (12) to the current-sense pin (22) of the control IC (21), thereby triggering the control IC (21) to halt switching of the switching transistor (23) during the surge event.

## Amended claims

### Amended claims in accordance with Rule 137(2) EPC.

1. A surge protection circuit (10) for a Flyback converter (20), the Flyback converter (20) having a control integrated circuit, IC, (21) with a current-sense pin (22), and a switching transistor (23), the surge protection circuit (10) comprising:
a surge event detection component (11) configured to detect a surge event based on an input voltage (24) to the Flyback converter (20), and generate an output signal (12) upon detecting the surge event; and
**characterized in that** a signal path from the surge event detection component (11) to the current-sense pin (22) of the control IC (21), wherein the output signal (12) is adapted to emulate an overcurrent condition at the current-sense pin (22), thereby triggering the control IC (21) to halt switching of the switching transistor (23) during the surge event.

2. The surge protection circuit (10) of claim 1, wherein the surge event detection component (11) comprises:
a voltage sensing arrangement 13 configured to monitor the input voltage (24) of the Flyback converter (20); and
a comparator (14) coupled to the voltage sensing arrangement 13, configured to compare the monitored input voltage against a predetermined threshold, and generate the output signal (12) when the detected input voltage exceeds the predetermined threshold.

3. The surge protection circuit (10) of any preceding claims, further comprising a transistor (15) configured to discharge a gate of the switching transistor (23) to ground upon detection of the surge event.

4. The surge protection circuit (10) of any preceding claims, further comprising a damping resistor (16) configured to reduce the amplitude of oscillations on a drain of the switching transistor (23) upon detection of the surge event.

5. The surge protection circuit (10) of claims 3 and 4, further comprising an auxiliary winding (17) on a primary side of a transformer of the Flyback converter (20), wherein the transistor (15) is further configured to connect the auxiliary winding (17) to ground through the damping resistor 16 upon detection of the surge event.

6. A power converter (1) comprising:
a Flyback converter (20) having a control integrated circuit, IC (21), with a current-sense pin (22), and a switching transistor (23), and
a surge protection circuit (10) of any preceding claims.

7. The power converter (1) of claim 6, wherein the control IC (21) is configured to:
stop switching during an overcurrent condition; and
restart switching operation automatically after a predefined off-time once the overcurrent condition has subsided.

8. The power converter (1) of claim 6 or 7, wherein the power converter (1) is for driving an LED load.

9. A system comprising:
a power converter (1) according to any of the claims 6 to 8, and
an LED-based load supplied directly or by means of a further converter stage of the system, by said power converter (10).

10. A surge protection method (400) for a Flyback converter (20) having a control integrated circuit, IC (21), with a current-sense pin (22), and a switching transistor (23), the method (400) comprising:
detecting (401) a surge event based on an input voltage (24) to the Flyback converter (20);
**characterized in that**,
generating (402) a signal (12) emulating an overcurrent condition upon detecting the surge event; and
providing (403) said signal (12) to the current-sense pin (22) of the control IC (21), thereby triggering the control IC (21) to halt switching of the switching transistor (23) during the surge event.
